# FASCICULE DE BREVET EUROPEEN

(11) **EP 0 797 023 B1**
(45) Date de publication et mention de la délivrance du brevet: **17.07.2002**
(21) Numéro de dépôt: 97103731.2
(22) Date de dépôt: 06.03.1997
(51) Int. Cl.: F16F 15/123

(54) **Amortisseur de torsion à rondelle entretoise, notamment pour véhicule automobile**
Drehmomentdämpfer mit Abstandsring, insbesondere für Kraftfahrzeuge
Torsional damper having a spacer ring, especially for automotive vehicles

(30) Priorité: 22.03.1996 FR 9603597
(43) Date de publication de la demande: 24.09.1997
(73) Titulaire: VALEO, 75017 Paris (FR)
(72) Inventeur: Hemeryck, Bruno, 80160 Belleuse (FR); Lefevre, Gérard, 80480 Saleux (FR)

(56) Documents cités:
- EP-A- 0 488 859
- GB-A- 2 089 472
- GB-A- 2 254 398

## Description

La présente invention concerne les amortisseurs de torsion, notamment les friction d'embrayage pour véhicules automobiles, comportant deux parties coaxiales montées mobiles angulairement l'une par rapport à l'autre suivant une course limitée, à l'encontre de premiers moyens élastiques et de premiers moyens de frottement à action axiale, dans lequel l'une des parties comporte deux rondelles de guidage disposées de part et d'autre d'un voile appartenant à l'autre partie coaxiale composée du voile et d'un moyeu coaxiaux mobiles angulairement l'un par rapport à l'autre, à l'encontre de seconds moyens élastiques, dans un secteur de débattement angulaire définit par des dentures complémentaires, avec jeu circonférentiel, du voile et du moyeu et dans lequel les premiers moyens de frottement comportent une rondelle entretoise formant entretoise entre le voile et l'une des rondelles de guidage, dite première rondelle de guidage, tandis que des troisièmes moyens élastiques sont prévus et sont interposés entre les dentures du voile et du moyeu pour permettre une venue en prise desdits dentures avec un effet de freinage antibruit, la rondelle extretoise (6) comporte intérieurement une première portion (64) adjacente à la première rondelle de guidage (2) et extérieurement une deuxième portion (66, 166) adjacente au voile (4) par l'intermédiaire de laquelle la rondelle entretoise (6) est calée en rotation par rapport audit voile (4), en ce que lesdites portions sont décalées axialement et radialement pour formation d'une cavité (10) délimitée par lesdites portions, le voile (4) et la denture (70) du moyeu (5) prolongée à cet effet.

Un tel amortisseur conforme au préambule de la revendication 1 est décrit dans le document EP 0 488 859.

Dans celui-ci les rondelles de guidage sont solidaires d'un élément d'entrée propre à être lié en rotation à un arbre menant, tandis que le moyeu forme un élément de sortie propre à être solidarisé en rotation à un arbre mené.

S'agissant d'une friction d'embrayage, l'élément d'entrée consiste en un disque de support de garnitures de friction propre à être serrées, de manière débrayable, entre les plateaux de pression et de réaction solidaires en rotation du vilebrequin du moteur constituant l'arbre menant. L'arbre mené est constitué par l'arbre d'entrée de la boîte de vitesses.

Les troisièmes moyens élastiques adoucissent la venue circonférentiellement en butée de manière positive des dentures du voile et du moyeu, ce qui évite les bruits.

Dans une forme de réalisation selon le document FR-A-2 496 210 les troisièmes moyens élastiques consistent en au moins un anneau engagé autour d'une des dents desdites dentures dans une gorge de cette dent. L'anneau est adapté à être comprimé par les dents voisines de l'autre denture.

Cette disposition donne satisfaction. Néanmoins pour transmettre plus de couple il est souhaitable de ne pas doter ladite dent d'une gorge.

La présente invention a pour objet de répondre de manière simple et économique à ce souhait.

Suivant l'invention un amortisseur de torsion du type sus-indiqué est caractérisé en ce que les troisièmes moyens élastiques sont implantés dans ladite cavité et engagés à jeu circonférentiel entre au moins deux dents consécutives de la denture du moyeu pour coopérer avec lesdites dents avant venue en prise des dentures du voile et du moyeu et en ce que lesdits troisièmes moyens élastiques sont montés sur au moins une saillie issue axialement de la portion interne de la rondelle entretoise.

Grâce à l'invention les dents du moyeu et du voile sont intacts et les troisièmes moyens élastiques sont portés par la rondelle entretoise obtenue aisément par moulage, en étant avantageusement en matière synthétique moulable, ce qui permet de donner la forme choisie à la saillie. Ces troisièmes moyens élastiques ne s'étendent que d'un côté du voile et sont protégés par la rondelle entretoise constituant un masque pour ceux-ci. Ils s'étendent avec la saillie, parallèlement à la denture prolongée du moyeu.

Ainsi il est possible d'implanter aisément les troisièmes moyens élastiques à la périphérie externe de la denture du moyeu puisque la rondelle entretoise est distincte du voile et du moyeu. Cela est aisé lorsque la rondelle entretoise comporte un palier centrant les rondelles de guidage par rapport au moyeu.

Ces troisièmes moyens élastiques peuvent déborder radialement vers l'extérieur et s'étendre en partie radialement au-dessus de la denture du moyeu puisqu'ils s'étendent à l'extérieur du voile.

Il est possible de former par avance un sous-ensemble rondelle entretoise - troisièmes moyens élastiques et ensuite de monter ledit sous-ensemble par enfilage sur le voile aisément car les seconds moyens élastiques centrent le voile par rapport au moyeu. En outre on occupe au mieux la place disponible entre les dents du moyeu.

Avantageusement des moyens de liaison par coopération de formes sont prévus entre le voile et la rondelle entretoise pour caler en rotation ladite rondelle par rapport au voile. Par exemple la deuxième portion porte des pions cylindriques engagés dans des trous complémentaires pratiqués dans le voile. L'inverse est possible.

Ainsi la rondelle entretoise est indexée angulairement par rapport au voile et à la denture de celui-ci et le montage de la rondelle entretoise sur le voile est aisé.

Pour ce faire les pions sont engagés de préférence à force dans les trous.

Ainsi aucun jeu circonférentiel ne se produit alors entre le voile et la rondelle, l'extrémité libre des pions étant avantageusement chanfreinée pour faciliter le montage dans les trous.

Dans une forme de réalisation les troisièmes moyens élastiques comportent un anneau en matière élastomère monté autour de la saillie issue axialement de la portion interne.

La saillie est avantageusement venue de moulage avec la rondelle entretoise et peut avoir un profil non blessant pour ne pas abîmer l'anneau. Elle peut être plate en étant mince radialement, et allongée circonférentiellement avec de préférence deux bords extrêmes arrondis pour ne pas blesser l'anneau adapté à coopérer au début ponctuellement avec la dent concernée du moyeu.

Avantageusement au moins deux troisièmes moyens élastiques sont prévus pour une meilleure répartition des efforts.

La rondelle entretoise peut être conformée pour porter en partie les seconds moyens élastiques en sorte que les dentures du voile et du moyeu sont plus robustes et simplifiées.

Les troisièmes moyens élastiques peuvent être élastiques par leur forme. Il peut s'agir par exemple de lames métalliques bombées portées par la saillie pour venir en contact ponctuel avec les dents concernées du moyeu et être comprimée progressivement.

La description qui va suivre illustre l'invention en regard des dessins annexés dans lesquels :

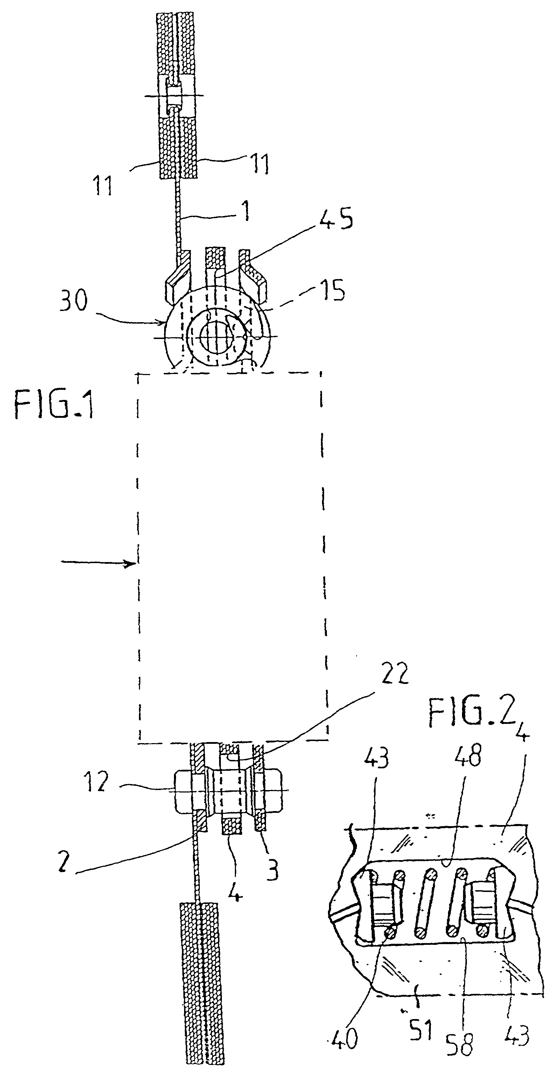

- la figure 1 est une vue en coupe axiale de la périphérie externe d'une friction d'embrayage, sa partie centrale non visible étant représentée par un encart ;
- la figure 2 est une vue partielle en coupe axiale pour montrer l'un des seconds moyens élastiques que comporte la friction d'embrayage ;
- la figure 3 représente à plus grande échelle la partie centrale de la friction d'embrayage de la figure 1 repérée par l'encart 3 de celle-ci ;
- la figure 4 est une vue selon la flèche 4 de la figure 3 montrant la rondelle palier équipée des troisièmes moyens élastiques selon l'invention, ainsi que la denture du moyeu, les seconds moyens élastiques étant ôtés pour plus de clarté ;
- la figure 5 est une vue analogue à la figure 3 pour un autre exemple de réalisation ;
- la figure 6 est une vue en coupe axiale selon la ligne 6-6 de la figure 5.

L'amortisseur représenté dans les figures est une friction d'embrayage pour véhicule automobile.

Cette friction comporte des pièces de transmission de couple, ici métalliques, à savoir un disque de support 1 implanté à la périphérie externe de la friction et solidaire de deux rondelles de guidage 2,3 disposées de part et d'autre d'un voile 4 entourant, ainsi que les rondelles de guidages 2,3, un moyeu central 5 globalement de forme tubulaire et d'épaisseur variables. La friction présente ainsi un axe axial X-X de symétrie.

Cette friction comporte également des pièces de frottement, à savoir deux garnitures de friction de forme annulaire 11, une première rondelle de frottement 31 entourant une seconde rondelle de frottement 41 et une rondelle entretoise 6. Les rondelles 31,41,6 sont ici en matière synthétique moulable.

La friction comporte en outre une première rondelle Belleville 32 à action axiale entourant une seconde rondelle Belleville 42 à action axiale et de plus faible raideur que la première rondelle Belleville 32. En variante les rondelles 32,42 peuvent être des rondelles élastiques ayant une forme ondulée.

Cette friction est dotée de premiers ressorts à boudin 30, de seconds ressorts à boudin 40 de plus faible raideur que les premiers ressorts 30, de coupelles d'appui 43, ici en matière synthétique, à face dorsale en forme de dièdre et à face frontale portant un téton de centrage. Les seconds ressorts 40 sont implantés radialement en dessous des premiers ressorts 30 et prennent appui à chacune de leurs extrémités circonférentielles sur la face frontale d'une coupelle 43, dont le téton de centrage pénètre à l'intérieur dudit ressort 40 pour centrage de celui-ci.

Les ressorts 30,40 agissent dans les figures illustrées circonférentiellement.

Les rondelles de guidage 2,3 sont reliées entre elles par des entretoises 12 en forme de colonnettes servant également à la fixation du disque support 1 accolé à l'une des rondelles de guidage 2,3, ici à la rondelle de guidage 2.

Les entretoises 12 traversent chacune à jeu circonférentiel une échancrure 22 pratiquée à la périphérie externe du voile 4 en sorte que le mouvement angulaire relatif entre le voile 4 et les rondelles de guidage 2,3 est limité par venue en prise des entretoises 12 avec les bords circonférentiels des échancrures 22.

Le disque de support 1 porte à fixation à sa périphérie externe, radialement au-delà des rondelles de guidage 2,3, les garnitures de friction 11 disposées de part et d'autre dudit disque 1.

Lesdites garnitures 11 sont destinées, ici, à être serrées entre les plateaux de pression et de réaction de l'embrayage solidaires en rotation du vilebrequin du moteur du véhicule.

Elles sont solidarisées ici par rivetage au disque 1. En variante elles sont collées sur le disque 1. Le moyeu 5 est cannelé intérieurement pour sa liaison en rotation à l'arbre d'entrée de la boîte de vitesses.

La première rondelle Belleville 32 prend appui sur l'une des rondelles de guidage 2,3, dite seconde rondelle de guidage 3, et sollicite la première rondelle de frottement 31 au contact du voile 4 tout en serrant la rondelle entretoise 6 entre l'autre rondelle de guidage 2, dite première rondelle de guidage, et le voile 4. Cette première rondelle de frottement 31 porte à sa périphérie externe, de place en place, des pions d'orientation axiale centrant la première rondelle Belleville et pénétrant chacun dans une ouverture complémentaire pratiquée dans la seconde rondelle de guidage 3 pour liaison en rotation avec celle-ci.

Les pions et les ouvertures forment donc des premiers moyens de liaison en rotation 34. Des seconds moyens de liaison en rotation 44 interviennent entre la seconde rondelle de frottement 41 et la seconde rondelle de guidage 3 pour liaison en rotation des rondelles 3, 41. La rondelle de guidage 3 présente pour ce faire des encoches à sa périphérie interne dans lesquelles pénètrent des bossages issus d'une partie tubulaire que présente la seconde rondelle de frottement 41 à sa périphérie interne. La seconde rondelle Belleville 42 est centrée à sa périphérie interne sur ladite partie tubulaire et prend appui à sa périphérie externe sur la seconde rondelle de guidage 3 pour solliciter la seconde rondelle de frottement 41 au contact de la base de la face d'extrémité d'une bride 51 que présente le moyeu 5 en surépaisseur à sa périphérie externe. La bride 51 s'étend axialement entre les deux rondelles de guidage 2,3 et traverse le voile 4 en s'étendant de part et d'autre de celui-ci. La seconde rondelle Belleville 42, par action et réaction, serre la rondelle entretoise 6 entre la première rondelle de guidage 2 et le moyeu 5. Pour ce faire la rondelle 6 comporte ici une portion tubulaire 61, formant palier, interposée radialement entre la périphérie interne de la première rondelle de guidage 2 et la périphérie externe du moyeu 5. Ici le moyeu 5 présente à la base de sa bride 51 une portion tronconique 52 et le palier 61 présente à son extrémité avant une portion tronconique complémentaire 62, venant au contact l'une avec l'autre sous l'action de la rondelle Belleville 42.

La première rondelle de guidage 2 présente à sa périphérie interne une portion transversale 24 raccordée à la partie principale de la première rondelle de guidage 2 par une portion inclinée 25. La rondelle 6, formant palier, épouse la forme de la première rondelle de guidage 2 et présente - d'un seul tenant - intérieurement une première portion 64 d'orientation transversale, au contact par sa face externe avec la portion 24, une portion intermédiaire 65 inclinée, s'étendant à léger jeu par rapport à la portion inclinée 25, et extérieurement une deuxième portion 66 d'orientation transversale, dont la face interne est au contact du voile 4. La première portion 64 se raccorde au palier 61.

Les faces internes, tournées vers le voile 4, des première et seconde portions sont donc décalées radialement et axialement l'une par rapport à l'autre et sont raccordées l'une à l'autre par ici une face cylindrique d'orientation axiale 165.

La portion intermédiaire 65 est ainsi d'épaisseur variable avec ménagement d'un espace (volume) entre les première 64 et seconde 66 portions et formation d'un jeu entre l'extrémité axiale de la bride 51 et la première portion 64. Tout ceci est obtenu en décalant la portion 24 axialement vers l'extérieur (en direction opposée au voile 4).

La périphérie interne de la seconde rondelle de guidage 3 est également décalée axialement vers l'extérieur de la même manière pour loger les rondelles 41,42. Tout ceci permet d'allonger la bride 51, les rondelles de guidage 2,3 étant élargies à leur périphérie interne.

Par ailleurs la deuxième portion 66 porte en saillie axiale des pions 67, ici cylindriques à section circulaire, engagés de manière complémentaire dans des trous 47 circulaires du voile 4 porté ainsi à centrage par la rondelle 6 formant entretoise axiale entre la première rondelle de guidage 2 et le voile 4, ainsi qu'entre la première rondelle de guidage 2 et le moyeu 5.

Cette rondelle 6 centre les rondelles de guidage 2,3 et le voile 4 par rapport au moyeu 5 traversant les rondelles de guidage 2,3.

La première rondelle Belleville 32 sollicite donc la première rondelle de guidage 2 au contact de la face externe de la portion interne 64 de la rondelle 6 obtenue aisément par moulage. Cette rondelle 6, comme les rondelles de frottement 41,42 obtenues également par moulage, est chargée pour lui donner la résistance et le coefficient de frottement désiré.

Par ailleurs le voile 4 engrène à jeu circonférentiel avec le moyeu 5, en sorte que le débattement angulaire relatif entre le voile 4 est limité par venue circonférentiellement en prise des dents du voile 4 avec des dents du moyeu 5.

Plus précisément des moyens d'engrènement à jeu circonférentiel 7 interviennent entre la périphérie interne du voile 4 et la périphérie externe du moyeu 5. Le voile 4 présente à sa périphérie interne une denture 70 à dents 72 de forme trapézoïdale alternant avec des échancrures, tandis que la bride 51 présente à sa périphérie externe une denture 71 à dents 73 également de forme trapézoïdale et de profil identique à celles des dents 72, lesdites dents alternant circonférentiellement avec des échancrures.

Les dents 72 pénètrent à jeu circonférentiel dans les échancrures du moyeu 5, tandis que les dents 73 pénètrent à jeu circonférentiel dans les échancrures du voile 4.

Les dents 73 du moyeu 5 sont allongées axialement et forment des cannelures. Le voile 4 est axialement moins large que la bride cannelée 51, en sorte que les dents 73 débordent axialement par rapport au voile 4.

Les rondelles de guidage 2,3 sont plus écartées à leur périphérie interne qu'au niveau de leurs entretoises 12. Cela n'est pas gênant car ici les ressorts 30 sont logés dans des fenêtres 15 des rondelles 2,3, dont les bords supérieurs sont dotés de lèvres saillantes pour retenir les ressorts 30. L'écartement axial entre lesdites lèvres est globalement égal à l'écartement axial entre les périphéries internes des rondelles de guidage 2,3, dont la conformation permet de décaler axialement vers l'extérieur les rondelles 41,42 par rapport aux rondelles 31,32. L'encombrement axial n'est ainsi pas augmenté.

Les ressorts 30 sont montés dans des fenêtres 45,15 pratiquées en vis-à-vis dans le voile 4 et les rondelles de guidage 2,3.

Les ressorts 40 sont montés dans des échancrures 48,58 pratiquées en vis-à-vis respectivement à la périphérie interne du voile 4 et à la périphérie externe de la bride 51.

Les échancrures 48 sont ouvertes en direction de l'axe X-X, vers l'intérieur, tandis que les échancrures 58 sont ouvertes en direction opposée à l'axe X-X, vers l'extérieur. Les bords circonférentiels ou latéraux des échancrures 48,58 sont inclinés en sorte qu'il est formé une pointe lorsque la friction d'embrayage est à l'état de repos, les échancrures 48,58 étant globalement en forme de queue d'aronde. Les coupelles 43 ont une forme complémentaire à celle desdits bords circonférentiels. Ici deux équipages diamétralement opposés de ressorts 40 à coupelles 43 sont prévus pour accoupler élastiquement le voile 4 au moyeu 5. Les ressorts 30 accouplent élastiquement les rondelles de guidage 2,3 au voile 4 et sont tous montés sans jeu dans les fenêtres 15 des rondelles de guidage. Le nombre des ressorts 30 est fonction des applications. Ici quatre paires de ressorts 30 coaxiaux sont prévus. Ces paires de ressorts sont répartis régulièrement à 90°, deux paires de ressorts 30 sont montés sans jeu dans les fenêtres 45 du voile et les deux autres avec jeu pour, de manière connue, intervention étagée des ressorts 30.

En variante tous les ressorts 30 peuvent être montés sans jeu dans les fenêtres 45 du voile 4.

Ainsi les rondelles de guidage 2,3 appartiennent à une première partie coaxiale et le voile 4 a une deuxième partie coaxiale, elle-même composée du voile 4 et d'un moyeu 5 coaxiaux mobiles angulairement l'un par rapport à l'autre à l'encontre de deuxièmes moyens élastiques (les équipages coupelles 43 - ressorts 40) dans un secteur de débattement angulaire, défini par des dentures complémentaires 70,71 avec jeu circonférentiel (les moyens d'engrènement à jeu circonférentiel 7) du voile 4 et du moyeu 5.

Les deux parties coaxiales 1,11,2,3-4,5 sont mobiles angulairement l'une par rapport à l'autre suivant une course limitée à l'encontre de premiers moyens élastiques (les ressorts 30).

La course est limitée par venue en prise des entretoises 12 avec les bords des échancrures 22, en variante cela est réalisé par venue à spires jointives des ressorts 30 ; les entretoises 12 pouvant dans ce cas s'étendre radialement au-delà du voile 4.

Bien entendu certains des ressorts 30,40, ici du type ressorts à boudin, peuvent être remplacés par des blocs en matière élastique telle que de l'élastomère. Les rondelles 31,32,6 (la portion 64) appartiennent à des premiers moyens de frottement à action axiale. Les rondelles 41,42,6 (le palier 61) appartiennent à des deuxièmes moyens de frottement à action axiale et à frottement moindre que les premiers moyens de frottement pour ne pas oblitérer l'action des ressorts 40 de faible raideur.

L'amortisseur de torsion comporte ainsi un amortisseur principal (disque 1 garnitures 11 - rondelles de guidage 2,3 - voile 4 - premiers moyens élastiques 30 - premiers moyens de frottement 31,32,64) destiné à filtrer les vibrations dans le domaine de marche (ou de roulage) du véhicule et un préamortisseur (voile 4 - moyeu 5 - seconds moyens élastiques 40,43 - seconds moyens de frottement 41,42,61) pour filtrer les vibrations dans le domaine de régime de ralenti du moteur. Lors du débattement angulaire relatif entre l'élément d'entrée (le disque et les garnitures 11), et l'élément de sortie (le moyeu 5) de l'amortisseur de torsion un frottement permanent se produit entre le voile 4 et la seconde rondelle de frottement 41.

Dans une première phase de débattement, les rondelles 2,3 forment un bloc avec le voile 4 car les ressorts 30 sont plus raides que les ressorts 40, qui sont alors comprimés jusqu'à annulation du jeu des moyens d'engrènement à jeu 7. Un frottement se produit entre les portées 52,62.

Après cette phase les dents 72 du voile 4 viennent en prise avec les cannelures 73 de la bride 51, le voile 4 est solidaire en rotation du moyeu 5 et les ressorts 40 restent dans leur état bandé.

Les ressorts 30 sont ainsi, dans une deuxième phase, comprimés et les premiers moyens de frottement entrent en action, ainsi de manière différée. Un frottement se produit alors entre, d'une part, la première rondelle de frottement 31 et le voile 4, et, d'autre part, entre la première rondelle de guidage 2 et la rondelle palier 6 notamment entre les portions 64,24. La venue en prise des dents 72,73 créée des chocs et des bruits.

Pour cette raison, il est prévu des troisièmes moyens élastiques 8 interposés entre les dents 72,73 et adaptés à permettre une venue en butée circonférentielle positive des dentures 70,71 du voile 4 et du moyeu 5 avec un effet de freinage antibruit. Ces troisièmes moyens élastiques 8 adoucissent la venue en butée circonférentielle des dentures 70,71.

Plus précisément, suivant l'invention, on tire parti de la rondelle entretoise 6 et notamment de ses portions 64,66 décalées axialement et radialement l'une par rapport à l'autre. Il est ainsi créé une cavité 10 délimitée par les portions 64,66, le voile 4 et la bride 51, plus précisément la denture 71 allongée à cet effet. C'est dans cette cavité 10 que sont logés les troisièmes moyens élastiques 8.

Suivant l'invention les troisièmes moyens élastiques 8 sont portés par au moins une saillie 9, d'orientation axiale, dirigée vers le voile 4 et portée par la partie transversale 64,65,66, formant entretoise, de la rondelle 6.

La saillie 9 et lesdits moyens élastiques 8 s'étendent parallèlement à la denture 71 et donc aux cannelures 73.

Ici la saillie 9 est issue d'un seul tenant de la portion 64 et s'érige axialement à partir de la face interne de la portion 64 en étant légèrement en retrait par rapport au voile 4 et à la face interne de la portion 66 pour ne pas venir en contact avec le voile 4. La saillie 9 pénètre à jeu circonférentiel entre deux cannelures 73 (dents consécutives), de la bride 51 (c'est-à-dire dans une échancrure de la denture 71).

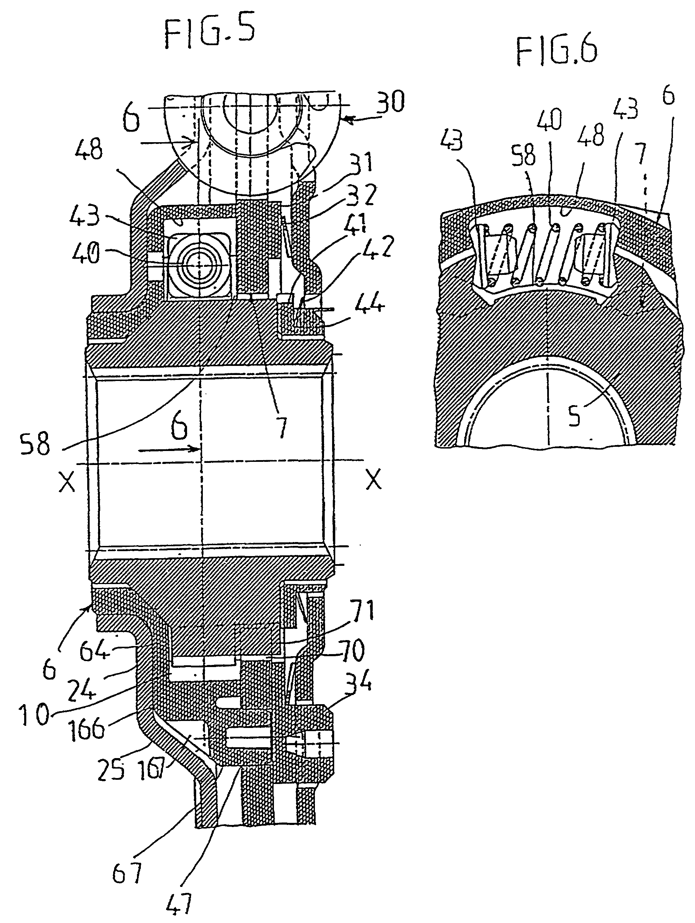

En section la saillie 9 a une forme oblongue avec deux côtés longitudinaux parallèles raccordés à chacune de leurs extrémités par un demi cercle. La saillie 9 est donc plate en étant mince radialement et allongée circonférentiellement avec des bords d'extrémités arrondis donc peu blessants. Les troisièmes moyens élastiques consistent en au moins un bloc en matière élastomère 8 sous forme d'anneau engagé autour de la saillie 9. L'anneau 8 de section torique est monté à serrage autour de la saillie 9 dont il épouse intérieurement la forme. En variante il est collé sur la saillie 9. Il peut être initialement de forme circulaire et être monté par déformation élastique sur la saillie 9. En variante il peut avoir initialement une forme complémentaire à celle de la saillie. Lors du mouvement relatif entre le moyeu 5 et le voile 4 les cannelures 73 concernées de la bride 51 sont admises à venir d'abord ponctuellement en contact avec l'anneau 8 (figure 4) du fait que les dents ont une forme trapézoïdale et l'anneau 8 une forme arrondie à ses bords d'extrémité. Ici deux saillies 9 et deux anneaux 8 diamétralement opposés sont prévus (figure 4) sachant que les dentures 70,71 sont interrompues par les échancrures 48,58 diamétralement opposées. La bride 51 présente ici six cannelures 73 et le voile six échancrures. Les saillies 9 s'étendent à la périphérie externe des cannelures 73, la partie supérieure des anneaux 8 s'étendant radialement au-dessus des cannelures 73.

Les anneaux 8 s'étendent à jeu circonférentiel entre deux cannelures 73 consécutives.

On appréciera, grâce à la liaison en rotation de la rondelle 6 avec le voile 4 (pions 67 - trous 47) qu'il est possible de positionner les saillies 9 par rapport aux dents 72 du voile 4, afin que les cannelures 73 viennent en contact avec les anneaux 8 avant de venir en contact avec les dents 72 (figure 4).

Les anneaux 8 sont comprimés par les cannelures 73 voisines (consécutives) du moyeu 5.

Avantageusement les anneaux 8 sont plus raides que les ressorts 30 pour une bonne filtration des vibrations. Les ressorts 30 centrent le voile 4 par rapport au moyeu 5.

La face cylindrique 165 de la rondelle 6 est creusée en 168 en regard des saillies 9 pour montage des anneaux 8.

On appréciera que les saillies 9 sont venues aisément de moulage de la rondelle entretoise 6 en matière synthétique moulable et que les dentures 70,71 sont dépourvues de gorge et robustes.

Avec une friction standard à dentures normales on obtient donc aisément et économiquement une fonction supplémentaire grâce à la rondelle 6, formant entretoise entre la deuxième rondelle de guidage 2 et le voile 4 ; la forme extérieure de cette rondelle 6 étant mieux visible à la figure 4. Ladite rondelle 6 a une forme carrée à arêtes (coins) arrondies pour porter les pions 67 à extrémité libre chanfreinée pour mieux pénétrer dans les trous 47 sans dépasser par rapport à ceux-ci.

Bien entendu en variante la rondelle entretoise 6 peut présenter également les échancrures 48 (figures 5 et 6).

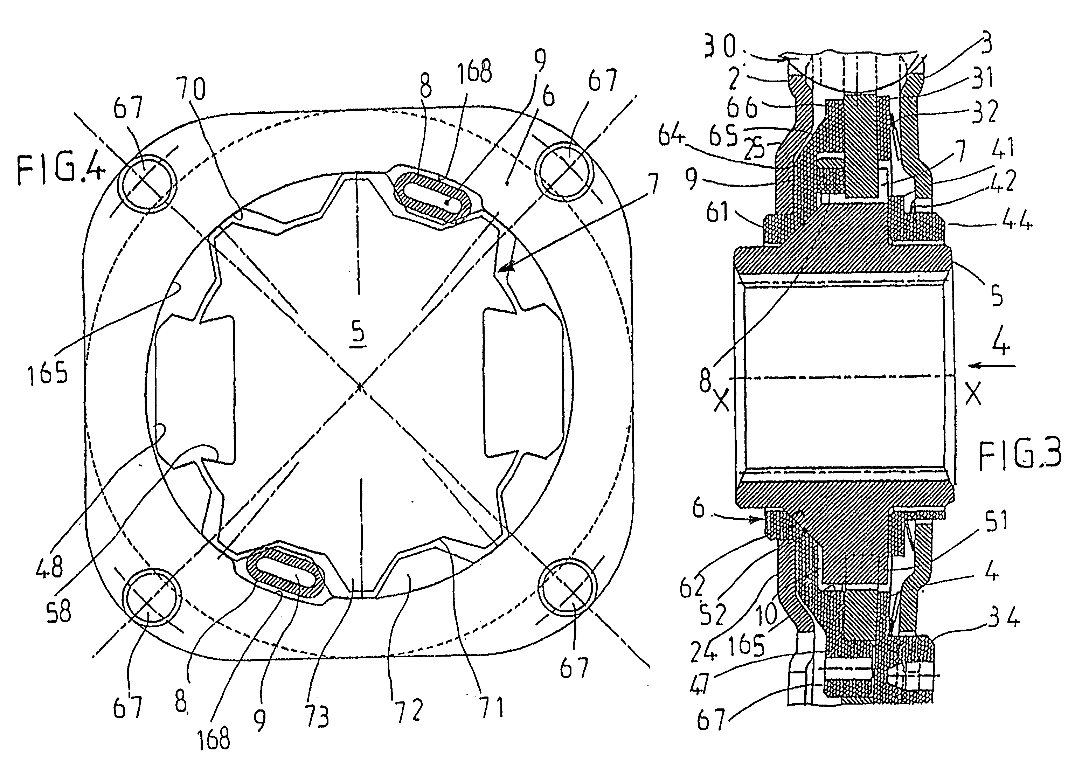

Dans ces figures la rondelle 6 présente des saillies 9 et des anneaux 8 comme dans les figures 3 et 4.

Les saillies 9 et les anneaux 8 sont donc implantés chacun entre deux échancrures 48 consécutives de la rondelle entretoise 6.

Il en résulte que le voile 4 est dépourvu d'échancrure de logement des ressorts 40 en sorte qu'il est rigidifié, simplifié et accouplé élastiquement au voile 4 via la rondelle 6.

On peut ne pas modifier le moyeu 5 qui, dans les figures 3 et 4, présente des échancrures 58 et une denture 71 s'étendant sur toute la longueur axiale de la bride 51.

Ici les échancrures 58 s'étendent axialement uniquement en vis-à-vis des échancrures 48, tandis que la denture 71 s'étend sur toute la longueur axiale de la bride. Pour ce faire le moyeu 5 est réalisé par exemple par frittage. Le moyeu 5 est également rigidifié car il est dépourvu d'échancrure 48 de logement des ressorts 30 en regard de la denture 70 du voile 4.

Dans ces figures 5 et 6 la rondelle 6 ne présente pas transversalement de portion intermédiaire inclinée comme dans les figures 3 et 4. Cela provient du fait que la portion 25 de la rondelle de guidage est plus inclinée et que les ressorts 30 sont implantés radialement plus près de l'axe X-X. Les portions 65 et 66 des figures 3 et 4 sont confondues pour former ici la portion externe 166 décalée axialement et radialement par rapport à la portion interne 64 à laquelle elle se raccorde. La face interne de la portion 166, ainsi que celle de la face 64, s'étendent transversalement.

Les pions 67 sont associés à des nervures de rigidification 167 s'étendant parallèlement à la portion 25 à distance de celle-ci.

En variante il est possible d'augmenter le nombre de dents 72,73 en supprimant les échancrures 48,58, ce qui permet la transmission d'un couple supérieur.

En effet il est possible de prévoir d'autres saillies semblables aux saillies 9 et portant des anneaux supplémentaires en élastomère de plus faible raideur constituant les seconds moyens élastiques. Par exemple ces anneaux peuvent être évidés intérieurement et présenter des cavités. Ces anneaux font alors office de moyens élastiques de centrage entre le voile et le moyeu 5 en étant pour la position de repos de la friction en contact avec deux cannelures 73 consécutives du moyeu 5.

On peut multiplier le nombre de saillies pour augmenter le nombre des seconds moyens élastiques. Les seconds moyens élastiques sont alors portés en partie par la rondelle palier 6 et interviennent de manière étagée, certaines saillies supplémentaires portent des anneaux intervenant après rattrapage d'un jeu. Les dentures du voile 4 et du moyeu 5 ont alors une forme simple en étant dépourvues d'échancrures.

On peut ainsi augmenter le nombre de dents et transmettre un couple plus important. En variante la rondelle entretoise 6 peut présenter axialement des surépaisseurs délimitées par la portion 64 et la face 165. Ces surépaisseurs présentent chacune un évidement central pour montage des blocs en matière élastique dotés chacun d'une échancrure dans laquelle s'engage sans jeu circonférentiel une dent 73 du moyeu 5. Les blocs forment ainsi les seconds organes élastiques 40.

Dans tous les cas les troisièmes élastiques 8 résistent bien à la force centrifuge et sont admis à être comprimés par les dents voisines 73 du moyeu 5 et donc à fluer avant annulation du jeu des moyens d'engrènement à jeu circonférentiel 7.

Bien entendu la présente invention n'est pas limitée aux exemples de réalisation décrits. Elle s'applique d'une manière générale aux amortisseurs de torsion dont la partie d'entrée est par exemple constituée par le disque de support 1 ou un prolongement de la première rondelle de guidage fixé sur un volant moteur solidaire du vilebrequin du moteur du véhicule ou plus généralement d'un arbre menant.

Le moyeu 2, formant élément de sortie, solidaire en rotation d'un arbre mené, peut être calé en rotation à l'aide de languettes sur le carter d'un appareil d'accouplement hydrocinétique. Les ressorts 30,40 peuvent agir radialement. Par exemple les ressorts 30 peuvent être montés à l'aide chacun d'une boucle à articulation sur les colonnettes 12 et à articulation sur le voile 4 alors évidé à l'aide d'une autre boucle montée sur un axe porté par le voile 4. Les ressorts 40 peuvent être montés radialement dans les échancrures 48 et 58 du voile 4 et du moyeu 5 comme visible dans le document EP-0 412 559.

Dans ce cas on voit qu'il est possible de réaliser comme dans les figures 5 et 6 des échancrures dans la rondelle 6 et dans une portion en regard de la bride 51 avantageusement en matière frittée.

Le voile 4 est alors dépourvu d'échancrure.

La rondelle 6 peut ainsi porter en partie les seconds 40 et les troisièmes moyens élastiques 8, les seconds moyens élastiques pouvant consister en des blocs en matériau élastomère.

Bien entendu la rondelle 6 peut être en deux parties et comporter le palier 61 lié en rotation à la première rondelle de guidage 2 de la même manière que la deuxième rondelle de frottement 41 c'est-à-dire à l'aide de moyens de liaison en rotation 44 du type à bossages et échancrures.

Les portions 64,65,66 appartiennent alors à une rondelle entretoise distincte portant les troisièmes moyens élastiques 8.

Ces troisièmes moyens élastiques peuvent être constitués par des ressorts métalliques montés sur les bords latéraux, d'orientation axiale, des saillies 9.

Les ressorts métalliques peuvent consister en des lames bombées adaptées à être comprimés progressivement par les dents 73.

Ainsi selon l'invention la rondelle entretoise 6 comporte une portion interne 64 et une portion externe 66,166 décalées axialement et radialement en sorte que la face 165 n'est pas forcément cylindrique d'orientation axiale.

La rondelle entretoise 6 est ainsi évidée au niveau de sa face interne tournée vers le voile 4, les portions 64,66,166 étant adjacentes respectivement à la rondelle de guidage 2 et au voile 4.

Ceci permet la création d'une cavité 10 délimitée par lesdites portions 64,66, le voile 4 (la périphérie interne de celui-ci) et le moyeu 5 (la périphérie externe de celui-ci), plus précisément par la denture 71 du moyeu 5 prolongée à cet effet. Les troisièmes moyens élastiques 8 sont implantés dans ladite cavité en étant portés par la rondelle entretoise 6 et engagés à jeu circonférentiel entre au moins deux dents consécutives du moyeu 5. Ces troisièmes moyens élastiques sont adaptés à coopérer avec les dents voisines du moyeu 5 avant venue en prise circonférentielle des dentures 70,71 du voile 4 et du moyeu 5.

Lorsque l'amortisseur est en position de repos un jeu circonférentiel existe entre les troisièmes moyens élastiques 8 et les dents voisines 73 du moyeu 5, en sorte que les seconds organes élastiques 40 interviennent seuls au début du débattement angulaire relatif entre le voile 4 et le moyeu 5. Après (figure 4) les troisièmes organes élastiques 8 sont comprimés en permettant une venue en butée circonférentielle des dents 72,73.

On obtient une bonne filtration des vibrations et une réduction des bruits.

On appréciera, dans le mode de réalisation des figures 3 et 4, que l'anneau 8 est comprimé progressivement. L'anneau 8 peut présenter une face externe inclinée comme dans le document FR-A-2 496 210.

Bien entendu les pions 67 peuvent être de section rectangulaire, par exemple carrée, et il en est de même des trous 47. On peut inverser les structures en sorte que le voile 4 peut porter en saillie axiale des pions engagés dans des ouvertures de la rondelle 6.

Les pions peuvent être nervurés et être engagés à force par leurs nervures dans les trous du voile.

Les entretoises 12 peuvent être issues de l'une des rondelles de guidage, les premiers logements 45 du voile peuvent être ouverts vers l'extérieur. Les premiers logements des rondelles de guidage peuvent consister en des emboutis.

Les garnitures 11 peuvent venir en contact avec un plateau de réaction monté tourillonnant sur une première masse à l'aide d'un moyen de palier, tel qu'un roulement à billes.

La première masse est alors destinée à être fixée sur le vilebrequin du moteur à combustion interne et des moyens élastiques à action radiale ou circonférentielle accouplent la première masse au plateau de réaction. Comme visible à la figure 5, la première rondelle de guidage 2 peut être pourvue à la périphérie interne d'un rebord annulaire d'orientation axiale venant en contact avec la périphérie externe du palier 61 et participant au frottement pour contact avec la périphérie externe du palier 61.

Les portées 62,52 ne sont pas forcément coniques, le moyeu 5 pouvant être épaulé pour calage axial du palier 61 à face avant transversale et à alésage interne en contact avec la périphérie externe du moyeu 5. Ce moyeu 5 peut être moins épais en sorte que la seconde rondelle de frottement 41 peut venir en contact avec les extrémités des cannelures 73. Dans ce cas il faut intercaler une rondelle de protection métallique entre la rondelle 41 et l'extrémité des cannelures 73.

Les portions 64, 66 et 166 sont d'une manière générale adjacentes à la première rondelle de guidage et au voile 4. En effet une rondelle supplémentaire peut être interposée entre lesdites portions et l'élément rondelle de guidage - voile.

En variante l'un au moins des éléments rondelle de guidage - voile peut être revêtu d'une couche.

Toutes ces dispositions visent notamment à obtenir le coefficient de frottement voulu entre la portion 64 et la première rondelle de guidage 2. Il peut y avoir donc un contact direct ou indirect entre les portions 64,66 et respectivement la première rondelle de guidage et le voile 4.

Bien entendu le nombre des dents des dentures 70,71 dépend des applications. Il en est de même du nombre des troisièmes moyens élastiques.

D'une manière générale on peut inverser les structures, ainsi le voile 4 peut présenter des saillies axiales pénétrant dans des trous complémentaires de la rondelle entretoise 6 pour liaison en rotation de ladite rondelle avec le voile.

## Revendications

1. Amortisseur de torsion, notamment friction d'embrayage pour véhicule automobile, comportant deux parties coaxiales (1,2,3-4) montées mobiles angulairement l'une par rapport à l'autre suivant une course limitée, à l'encontre de premiers moyens élastiques (30) et de premiers moyens de frottement (6,41,42) à action axiale, dans lequel l'une desdites parties comporte deux rondelles de guidage (2,3) disposées de part et d'autre d'un voile (4) appartenant à l'autre desdites parties composées du voile (4) et d'un moyeu (5) coaxiaux mobiles angulairement l'un par rapport à l'autre, à l'encontre de seconds moyens élastiques (40), dans un secteur de débattement angulaire défini par des dentures complémentaires (70,71) avec jeu circonférentiel du voile (4) et du moyeu (5), et dans lequel lesdits premiers moyens de frottement comportent une rondelle entretoise (6) formant entretoise entre le voile (4) et l'une des rondelles de guidage (2,3) dite première rondelle de guidage (2), tandis que des troisièmes moyens élastiques (8) sont prévus et sont interposés entre les dentures (70,71) du voile (4) et du moyeu (5) pour permettre une venue en prise desdites dentures avec un effet de freinage antibruit, la rondelle entretoise (6) comportant intérieurement une première portion (64) adjacente à la première rondelle de guidage (2) et extérieurement une deuxième portion (66,166) adjacente au voile (4) par l'intermédiaire de laquelle la rondelle entretoise (6) est calée en rotation par rapport audit voile (4), lesdites portions étant décalées axialement et radialement pour formation d'une cavité (10) délimitée par lesdites portions, le voile (4) et la denture (70) du moyeu (5) étant prolongée à cet effet, **caractérisé en ce que** les troisièmes moyens élastiques (8) sont implantés dans ladite cavité (10) et engagés à jeu circonférentiel entre au moins deux dents consécutives (73) de la denture (71) du moyeu (5) pour coopérer avec lesdites dents avant venue en prise des dentures (70,71) du voile (4) et du moyeu (5) et **en ce que** lesdits troisièmes moyens élastiques (8) sont montés sur au moins une saillie (9) issue axialement de la portion interne (64) de la rondelle entretoise (6).

2. Amortisseur selon la revendication 1, **caractérisé en ce que** ladite saillie (9) est en retrait axialement par rapport au voile (4).

3. Amortisseur selon la revendication 1 ou 2, **caractérisé en ce que** les troisièmes moyens élastiques (8) consistent en au moins un anneau en élastomère monté autour d'une saillie issue axialement de la portion interne (64) de la rondelle entretoise (6).

4. Amortisseur selon la revendication 3, **caractérisé en ce que** l'anneau (8) est monté à serrage autour de ladite saillie (9).

5. Amortisseur selon la revendication 4, **caractérisé en ce que** l'anneau (8) a en section une forme torique.

6. Amortisseur selon l'une quelconque des revendications 1 à 5, **caractérisé en ce que** ladite saillie (9) a une forme oblongue en étant mince radialement et allongée circonférentiellement.

7. Amortisseur selon la revendication 6, **caractérisé en ce que** les bords extrêmes de la saillie (9) sont arrondis.

8. Amortisseur selon l'une quelconque des revendications 1 à 7, **caractérisé en ce que** la rondelle entretoise (6) comporte des échancrures (48) ouvertes vers l'intérieur en regard d'échancrures (58) ouvertes vers l'extérieur portées par le moyeu (5) pour logement des seconds moyens élastiques (40) et **en ce que** ladite saillie (9) est implantée entre deux échancrures consécutives de la rondelle entretoise (6).

9. Amortisseur selon l'une quelconque des revendications 1 à 8, **caractérisé en ce que** la rondelle entretoise (6) est calée en rotation sur le moyeu (5) à l'aide de pions (67) portés par la deuxième portion (66,166) et engagés chacun à force dans une ouverture associée (47) du voile (4).

10. Amortisseur selon l'une quelconque des revendications 1 à 9, **caractérisé en ce que** la rondelle entretoise (6) forme un palier (61) interposé entre la périphérie interne de la première rondelle de guidage (2) et la périphérie externe du moyeu (5).

11. Amortisseur selon l'une quelconque des revendications 1 à 10, **caractérisé en ce que** la rondelle entretoise (6) est en matière synthétique moulable et **en ce que** ladite saillie (9) est d'un seul tenant avec la rondelle entretoise (6) en étant venue de moulage avec celle-ci.

12. Amortisseur selon l'une quelconque des revendications 1 à 11, **caractérisé en ce que** la saillie (9) est implantée à la périphérie externe de la denture (71) du moyeu (5).

13. Amortisseur selon l'une quelconque des revendications 1 à 12, **caractérisé en ce que** les rondelles de guidage (2,3) sont élargies à leur périphérie interne pour rallonger la denture (71) du moyeu (5) formée à la périphérie externe d'une bride (51) que présente le moyeu (5) en surépaisseur.

## Claims

1. A torsion damper, especially a friction clutch for a motor vehicle, comprising two coaxial parts (1, 2, 3-4) mounted for circumferential motion of one with respect to the other over a limited course of travel and against the action of first resilient means (30) and axially acting first friction means (6, 41, 42), wherein one of the said parts comprises two guide rings (2, 3) disposed on either side of a damper plate (4) which is part of the other one of the said parts, the latter consisting of the damper plate and a hub (5), which are movable circumferentially one with respect to the other against the action of second resilient means (40), within a sector of angular displacement defined by sets of complementary teeth (70, 71) formed with a circumferential clearance on the damper place (4) and hub (5), and wherein the said first friction means comprise a spacing ring (6) constituting a spacer between the damper plate (4) and one of the guide rings (2, 3), referred to as the first guide ring (2), while third resilient means (8) are provided and are interposed between the sets of teeth (70, 71) of the damper plate (4) and hub (5) so as to enable the said sets of teeth to engage with each other with a sound-absorbing braking effect, the spacing ring (6) having an internal first portion (64) adjacent to the first guide ring (2) and an external second portion (66, 166) adjacent to the damper plate (4), the second portion mounting the spacing ring (6) for rotation with respect to the said damper plate (4), the said portions being offset axially and radially to define a cavity (10) delimited by the said portions, the damper plate (4) and the set of teeth (70) of the hub (5) being extended in length for this purpose, **characterised in that** the third resilient means (8) are mounted in the said cavity (10) and are engaged, with a circumferential clearance, between at least two consecutive teeth (73) in the set of teeth (71) of the hub (5), so as to cooperate with the said teeth before engagement of the sets of teeth (70, 71) on the damper plate (4) and hub (5), and **in that** the said third resilient means (8) are mounted on at least one projecting element (9) that projects axially from the internal portion (64) of the spacing ring (6).

2. A damper according to Claim 1, **characterised in that** the said projecting element (9) is set axially back from the damper plate (4).

3. A damper according to Claim 1 or Claim 2, **characterised in that** the third resilient means (8) consist of at least one annular ring of elastomeric material mounted around a projecting element projecting axially from the internal portion (64) of the spacing ring (6).

4. A damper according to Claim 3, **characterised in that** the annular ring (8) is mounted grippingly around the said projecting element (9).

5. A damper according to Claim 4, **characterised in that** the annular ring (8) has a toroidal cross section.

6. A damper according to any one of Claims 1 to 5, **characterised in that** the said projecting element (9) is oblong in form, being slender in the radial direction and elongated in the circumferential direction.

7. A damper according to Claim 6, **characterised in that** the terminal edges of the projecting element (9) are rounded.

8. A damper according to any one of Claims 1 to 7, **characterised in that** the spacing ring (6) has notches (48) open inwards and in facing relationship with notches (58) which are open outwards and carried by the hub (5) to accommodate the second resilient means (40), and **in that** the said projecting element (9) is located between two consecutive notches of the spacing ring (6).

9. A damper according to any one of Claims 1 to 8, **characterised in that** the spacing ring (6) is mounted on the hub (5), for rotation therewith, by means of pins (67) which are carried by the second portion (66, 166) and each of which is force-fitted in an associated aperture (47) of the damper plate (4).

10. A damper according to any one of Claims 1 to 9, **characterised in that** the spacing ring (6) defines a bearing (61) interposed between the inner periphery of the first guide ring (2) and the outer periphery of the hub (5).

11. A damper according to any one of Claims 1 to 10, **characterised in that** the spacing ring (6) is of mouldable synthetic material, and **in that** the said projecting element (9) is integral with the spacing ring (6), being moulded with the latter.

12. A damper according to any one of Claims 1 to 11, **characterised in that** the projecting element (9) is located at the outer periphery of the set of teeth (71) of the hub (5).

13. A damper according to any one of Claims 1 to 12, **characterised in that** the guide rings (2, 3) are widened at their inner periphery, for the elongation of the set of teeth (71) which are formed at the outer periphery of a flange (51) that extends the thickness of the hub (5).

## Patentansprüche

1. Torsionsdämpfer, insbesondere Reibungskupplungsscheibe für Kraftfahrzeuge, mit zwei koaxialen Teilen (1, 2, 3 - 4), die im Verhältnis zueinander winklig beweglich entlang einem begrenzten Verstellweg entgegen ersten elastischen Mitteln (30) und ersten axial wirksamen Reibungsmitteln (6, 41, 42) gelagert sind, wobei einer der besagten Teile zwei Führungsscheiben (2, 3) umfaßt, die beiderseits einer Zwischenscheibe (4) angeordnet sind, die zu dem anderen der besagten Teile gehört, die aus der Zwischenscheibe (4) und einer Nabe (5) in koaxialer Anordnung bestehen, die im Verhältnis zueinander winklig beweglich entgegen zweiten elastischen Mitteln (40) in einem Winkelauslenkungssektor gelagert sind, der durch mit Umfangsspiel formschlüssige Zahnungen (70, 71) der Zwischenscheibe (4) und der Nabe (5) definiert ist, und wobei die ersten Reibungsmittel eine Abstandsscheibe (6) umfassen, die ein Abstandsstück zwischen der Zwischenscheibe (4) und einer der Führungsscheiben (2, 3) bildet, die als erste Führungsscheibe (2) bezeichnet wird, während dritte elastische Mittel (8) vorgesehen und zwischen den Zahnungen (70, 71) der Zwischenscheibe (4) und der Nabe (5) eingefügt sind, um ein Ineinandergreifen der besagten Zahnungen mit einer geräuschdämpfenden Abbremswirkung zu ermöglichen, wobei die Abstandsscheibe (6) innen einen der ersten Führungsscheibe (2) zugekehrten ersten Abschnitt (64) und außen einen der Zwischenscheibe (4) zugekehrten zweiten Abschnitt (66, 166) umfaßt, über den die Abstandsscheibe (6) im Verhältnis zu der besagten Zwischenscheibe (4) gegen Verdrehung gesichert ist, wobei die besagten Abschnitte axial und radial versetzt sind, um eine Austiefung (10) zu bilden, die durch die besagten Abschnitte, die Zwischenscheibe (4) und die dazu verlängerte Zahnung (70) der Nabe (5) begrenzt ist,
**dadurch gekennzeichnet,**
**daß** die dritten elastischen Mittel (8) in der besagten Austiefung (10) angeordnet und mit Umfangsspiel zwischen wenigstens zwei aufeinanderfolgenden Zähnen (73) der Zahnung (71) der Nabe (5) eingesetzt sind, um mit den besagten Zähnen vor dem Ineinandergreifen der Zahnungen (70, 71) der Zwischenscheibe (4) und der Nabe (5) zusammenzuwirken, und daß die besagten dritten elastischen Mittel (8) auf wenigstens einem Vorsprung (9) angebracht sind, der axial vom inneren Abschnitt (64) der Abstandsscheibe (6) ausgeht.

2. Dämpfer nach Anspruch 1, **dadurch gekennzeichnet, daß** der Vorsprung (9) im Verhältnis zur Zwischenscheibe (4) axial zurückversetzt ist.

3. Dämpfer nach Anspruch 1 oder 2, **dadurch gekennzeichnet, daß** die dritten elastischen Mittel (8) aus wenigstens einem Ring aus Elastomer bestehen, der um einen Vorsprung herum eingesetzt ist, der axial vom inneren Abschnitt (64) der Abstandsscheibe (6) ausgeht.

4. Dämpfer nach Anspruch 3, **dadurch gekennzeichnet, daß** der Ring (8) eingespannt um den besagten Vorsprung (9) herum eingesetzt ist.

5. Dämpfer nach Anspruch 4, **dadurch gekennzeichnet, daß** der Ring (8) im Schnitt eine torische Form aufweist.

6. Dämpfer nach einem der Ansprüche 1 bis 5, **dadurch gekennzeichnet, daß** der Vorsprung (9) eine längliche Form aufweist, wobei er radial dünn und umfangsmäßig langgestreckt ist.

7. Dämpfer nach Anspruch 6, **dadurch gekennzeichnet, daß** die Abschlußkanten des Vorsprungs (9) abgerundet sind.

8. Dämpfer nach einem der Ansprüche 1 bis 7, **dadurch gekennzeichnet, daß** die Abstandsscheibe (6) nach innen offene Aussparungen (48) gegenüber an der Nabe (5) angebrachten nach außen offenen Aussparungen (58) für die Aufnahme der zweiten elastischen Mittel (40) enthält und daß der Vorsprung (9) zwischen zwei aufeinanderfolgenden Aussparungen der Abstandsscheibe (6) angeordnet ist.

9. Dämpfer nach einem der Ansprüche 1 bis 8, **dadurch gekennzeichnet, daß** die Abstandsscheibe (6) an der Nabe (5) drehfest anhand von Stiften (67) gesichert ist, die am zweiten Abschnitt (66, 166) angebracht und jeweils fest in eine zugehörige Öffnung (47) der Zwischenscheibe (4) eingesetzt sind.

10. Dämpfer nach einem der Ansprüche 1 bis 9, **dadurch gekennzeichnet, daß** die Abstandsscheibe (6) ein Lager (61) bildet, das zwischen dem inneren Umfang der ersten Führungsscheibe (2) und dem äußeren Umfang der Nabe (5) eingefügt ist.

11. Dämpfer nach einem der Ansprüche 1 bis 10, **dadurch gekennzeichnet, daß** die Abstandsscheibe (6) aus formbarem Kunststoff besteht und daß der Vorsprung (9) einstückig mit der Abstandsscheibe (6) ausgeführt ist, wobei er an dieser angeformt ist.

12. Dämpfer nach einem der Ansprüche 1 bis 11, **dadurch gekennzeichnet, daß** der Vorsprung (9) am äußeren Umfang der Zahnung (71) der Nabe (5) angeordnet ist.

13. Dämpfer nach einem der Ansprüche 1 bis 12, **dadurch gekennzeichnet, daß** die Führungsscheiben (2, 3) an ihrem inneren Umfang verbreitert sind, um die Zahnung (71) der Nabe (5) zu verlängern, die am äußeren Umfang eines Flansches (51) ausgebildet ist, den die Nabe (5) als Erhebung aufweist.
